# EUROPÄISCHE PATENTSCHRIFT

(11) **EP 3 188 134 B1**
(45) Veröffentlichungstag und Bekanntmachung des Hinweises auf die Patenterteilung: **04.08.2021**
(21) Anmeldenummer: 15202991.4
(22) Anmeldetag: 29.12.2015
(51) Int. Cl.: G07C 9/00

(54) **VERFAHREN ZUR KONTROLLE VON ZUGANGSBERECHTIGUNGEN DURCH EIN ZUGANGSKONTROLLSYSTEM**
METHOD FOR CONTROLLING ACCESS RIGHTS BY MEANS OF AN ACCESS CONTROL SYSTEM
PROCÉDÉ DE CONTRÔLE D'AUTORISATIONS D'ACCÈS PAR UN SYSTÈME DE CONTRÔLE D'ACCÈS

(43) Veröffentlichungstag der Anmeldung: 05.07.2017
(73) Patentinhaber: SKIDATA AG, 5083 Grödig/Salzburg (AT)
(72) Erfinder: Surkau, Reinhard, 83278 Traunstein (DE); Heider, Michael, 5084 Großgmain (AT); Schlechter, Thomas, 5201 Seekirchen am Wallersee (AT); Lang, Christian, 5120 Haigermoos (AT); Diaz, Jorge Juan Clemente, 5412 Puch bei Hallein (AT)
(74) Vertreter: Karakatsanis, Georgios

(56) Entgegenhaltungen:
- EP-A1- 1 752 931
- EP-A2- 0 940 775
- WO-A1-2011/128408
- DE-A1-102004 042 999
- DE-A1-102009 000 006

## Beschreibung

Die vorliegende Erfindung bezieht sich auf ein Verfahren zur Kontrolle von Zugangsberechtigungen durch ein Zugangskontrollsystem gemäß dem Oberbegriff des Patentanspruchs 1.

Aus dem Stand der Technik sind Zugangskontrollvorrichtungen für Personen bekannt, welche Mittel zum vorzugsweise berührungslosen Erfassen und zum Auswerten der Zugangsberechtigungen sowie mechanische oder sonstig ausgeführte Sperren, beispielsweise in Form von Drehkreuzen oder sogenannten Flap-Gates aufweisen, wobei die Sperren erst nach Vorliegen einer gültigen Zugangsberechtigung automatisch oder manuell im Öffnungssinne betätigt werden.

Ferner sind Zugangskontrollvorrichtungen für Fahrzeuge bekannt, welche ebenfalls Mittel zum Erfassen und Auswerten von Zugangsberechtigungen sowie Sperren in Form von Fahrzeugschranken aufweisen, welche nach Vorliegen einer gültigen Zugangsberechtigung im Öffnungssinne betätigt werden.

In nachteiliger Weise wird durch die Sperren und die damit einhergehende Blockade des Zutritts der Zugang unkomfortabel gestaltet. Insbesondere bei Zugangskontrollvorrichtungen für Personen wird das Vorhandensein der Sperren als unangenehm empfunden. Des Weiteren resultiert die in Verbindung mit den Sperren durchgeführte Zugangskontrolle in Stress, wodurch z.B. bei Skigebieten das Freizeitvergnügen in nachteiliger Weise signifikant beeinträchtigt wird.

Ferner erweist sich diese Art der Zugangskontrolle auch für die Betreiber der Transportmittel bzw. Freizeiteinrichtungen, bei denen die eingangs beschriebene Zugangskontrolle durchgeführt wird, als ineffizient und kostspielig, da in der Regel der überwiegende Anteil der Benutzer im Besitz einer gültigen Zugangsberechtigung ist. Nach dem Stand der Technik werden sämtliche Benutzer kontrolliert, um einen in der Regel sehr geringen Anteil von Schwarzfahrern bzw. von Benutzern mit ungültiger Zugangsberechtigung zu ermitteln, was zum einen mit einem hohen Aufwand verbunden ist und zum anderen zu Verzögerungen beim Zugang führt.

Aus der DE 10 2009 000006 A1 ist ein Verfahren zur Kontrolle eines Objektes in einem Überwachungsbereich bekannt, wobei mittels eines ersten Verfahrens Identifikationsdaten einer portablen Identifikationseinrichtung erfasst werden, wobei mittels Kameras Bilddaten erzeugt werden, die mittels einer Auswerteeinrichtung einer Identifikationseinrichtung zugeordnet werden . Hierbei werden die erzeugten Bilddaten mit einem Referenzbild vermieden, wobei die Bilddaten lediglich einmal erzeugt werden und die Überprüfung der Daten anhand dieses einmaligen Erfassungsvorgangs erfolgt.

Aus der WO 2011/128408 A1 geht eine Zugangskontrollvorrichtung zum Überwachen und Kontrollieren des Durchgangs von Personen durch einen Gang oder einer Türöffnung zwischen einem Außenbereich und einem Innenbereich hervor, wobei die Zugangskontrollvorrichtung wenigstens eine Vorrichtung zum Anfordern einer Durchgangsgenehmigung umfasst, welche von einer Person zu aktivieren ist, die eine Genehmigung anfordert, den Gang oder Türöffnung zu passieren. Die bekannte Zugangskontrollvorrichtung umfasst ferner eine Anwesenheitserkennungs- und Verfolgungsvorrichtung zum Erkennen der Anwesenheit einer Person in der Nähe des Gangs oder Türöffnung und zum Verfolgen der Bewegung einer Person innerhalb des Gangs oder Türöffnung und eine Steuereinheit die mit der wenigstens einen Vorrichtung zum Anfordern einer Durchgangsgenehmigung und der Anwesenheitserkennungs- und Verfolgungsvorrichtung wirkverbunden ist, wobei die Steuereinheit dazu ausgelegt ist, bei Aktivierung der Vorrichtung zum Anfordern einer Durchgangsgenehmigung, die Anwesenheitserkennungs- und Verfolgungsvorrichtung so zu steuern, dass sie aus einer Gruppe von Personen, die in der Nähe des Gangs oder Türöffnung anwesend sind, die Person erkennt und ortet, die die Vorrichtung zum Anfordern einer Durchgangsgenehmigung aktiviert hat.

Der vorliegenden Erfindung liegt die Aufgabe zugrunde, ein Verfahren zur Kontrolle von Zugangsberechtigungen durch ein Zugangskontrollsystem anzugeben, durch dessen Durchführung die Sperren entfallen und der Komfort erhöht wird, ohne die Qualität der Kontrolle der Zugangsberechtigungen zu beeinträchtigen.

Diese Aufgabe wird durch die Merkmale des Patentanspruchs 1 gelöst.

Demnach wird ein Verfahren zur Kontrolle von Zugangsberechtigungen durch ein Zugangskontrollsystem vorgeschlagen, im Rahmen dessen auf Datenträgern oder mobilen elektronischen Geräten abgelegte Zugangsberechtigungen oder IDs, denen zumindest eine Zugangsberechtigung eindeutig zugeordnet ist, mittels mit einem lokalen oder zentralen, gegebenenfalls geografisch entfernten, Server verbundener Leseeinrichtungen berührungslos erfasst und ausgelesen werden, wobei in jedem Eingangsbereich des Zugangskontrollsystems zumindest drei Leseeinrichtungen vorgesehen sind, welche den gesamten Eingangsbereich abdecken, wobei in jedem Eingangsbereich des Zugangskontrollsystems mehrere mit dem Server verbundene Kameras vorgesehen sind, welche den gesamten Eingangsbereich abdecken, wobei im Rahmen eines ersten Verfahrens mittels der Erfassung der Datenträger oder der mobilen elektronischen Geräte, auf denen eine gültige Zugangsberechtigung oder eine ID, der eine gültige Zugangsberechtigung eindeutig zugeordnet ist, abgelegt ist durch zumindest drei Leseeinrichtungen durch Trilateration bzw. Multilateration die aktuelle Position der Datenträger bzw. der mobilen elektronischen Geräte ermittelt wird, und wobei mittels eines zweiten, bildgebenden Verfahrens, welches parallel zum ersten Verfahren durchgeführt wird, mittels der Kameras die aktuelle Position sämtlicher im Eingangsbereich des Zugangskontrollsystems anwesenden Personen erfasst wird.

Die Erfassungsbereiche der Leseeinrichtungen und der Kameras sind im Rahmen der üblichen Toleranzen identisch.

Das erste Verfahren kann vorzugsweise ein Verfahren sein, im Rahmen dessen Datenträger oder mobile elektronische Geräte über den Bluetooth Low Energy-Standard (BLE) im Rahmen eines "Broadcasting" in regelmäßigen Abständen eine ID, der zumindest eine Zugangsberechtigung eindeutig zugeordnet ist oder Daten einer Zugangsberechtigung senden, welche von mit einem Computer umfassend eine CPU und Speichermittel verbundenen BLE Sende-Empfangseinheiten in Reichweite des mobilen elektronischen Gerätes oder des Datenträgers empfangen wird.

Hierbei erfolgt die Lokalisierung der mobilen elektronischen Geräte oder der Datenträger dadurch, dass anhand einer Referenzsignalstärke, die in der Regel der Signalstärke in einem Meter Entfernung entspricht und die als Information im Signal des mobilen elektronischen Geräts oder des Datenträgers enthalten ist oder in Abhängigkeit vom mobilen elektronischen Gerät oder vom Datenträger, z.B. vom Typ des Mobiltelefons, in einer im Computer gespeicherten Tabelle abgelegt ist, der Abstand zwischen dem mobilen elektronischen Gerät und den BLE Sende-Empfangseinheiten ermittelt wird, wobei anschließend eine Trilateration bzw. bei mehr als drei BLE Sende-Empfangseinheiten eine Multilateration durchgeführt wird.

Durch die Verwendung des langreichweitigen, energiesparenden BLE-Standards können von mobilen elektronischen Geräten wie Smartphones, Tablets oder Smartwatches oder von Datenträgern, wie beispielsweise RFID-Karten gesendete ID's, denen Zugangsberechtigungen eindeutig zugeordnet sind, von BLE Sende-Empfangseinheiten empfangen werden, ohne den Stromverbrauch signifikant zu erhöhen. Nach dem Empfangen einer ID von zumindest einer BLE Sende-Empfangseinheit, wird überprüft, ob dieser ID eine gültige Zugangsberechtigung zugeordnet ist, wobei diese Auswertung in einem mit der BLE Sende-Empfangseinheit verbundenen Computer oder in einem mit dem Computer verbundenen Server durchgeführt wird. Die ID kann z.B. eine Seriennummer des mobilen elektronischen Gerätes oder des Datenträgers sein. Wenn die Datenträger oder die mobilen elektronischen Geräte die Daten einer Zugangsberechtigung senden, wird die Zugangsberechtigung auf Gültigkeit überprüft.

Alternativ zur Durchführung des ersten Verfahrens mittels des BLE-Standards können zur Durchführung des ersten Verfahrens weitere geeignete Standards verwendet werden, wie beispielsweise der UWB-Standard (Ultra-WideBand) zur Nahbereichskommunikation, welcher eine Lokalisierung der Datenträger oder der mobilen elektronischen Geräte analog zum BLE-Standard mit hoher Genauigkeit ermöglicht.

Das zweite Verfahren kann insbesondere ein Verfahren zur Personenerkennung mittels 3D-Kameras, beispielsweise TOF-Kameras, nämlich Kameras, welche mittels eines Laufzeitverfahrens (time of flight, TOF) Distanzen messen, Stereokameras oder PMD-Kameras, nämlich TOF-Kameras umfassend einen Photomischdetektor, sein, welche mittels Bildanalyse eine genaue Positionserfassung der Personen ermöglichen.

Gemäß einer Ausgestaltung der Erfindung können Trinocularkameras verwendet werden, welche jeweils drei Einzel-Kameras unterschiedlichen Abstands zueinander umfassen, die in einer Reihe angeordnet sind, wobei jeweils zwei dieser Einzelkameras als Stereokamera agieren. In vorteilhafter Weise ermöglichen die unterschiedlichen Kombinationsmöglichkeiten der Einzelkameras zu einer Stereokamera eine breite Variation der möglichen Brennweiten des temporären Gesamtsystems und somit eine optimale Analyse der Area-of-Interest (Aol), nämlich des Eingangsbereiches des Zugangskontrollsystems.

Hierbei liefert eine geeignete Auswertung, z.B. unter Verwendung der dem Fachmann wohlbekannten Census Transformation und Kombination der Bilder einer jeden Einzel-Kamera ein Stereobild, welches auch Tiefeninformationen über die sich im Betrachtungsbereich befindlichen Personen und Gegenständen beinhaltet. Die Auswertung kann hierbei auf der Kamera selbst oder aber auf einem der Kamera zugeordneten Computer erfolgen. Je nach Ausstattung der Rechnerkomponenten sind durch Optimierung der Parameter Auflösung/Mono-Bildrate/Stereo-Bildrate/Gewählter Algorithmus/erlaubtes Delay (Echtzeitfähigkeit) unterschiedliche Performanceansprüche an das System möglich, welche eine optimale und effiziente Anpassung des Systems im Feld an die jeweiligen Umstände erlaubt.

Die gewonnen Tiefeninformationen können in einem nächsten Schritt weiter verwendet werden, um Personen im Bild zu isolieren, somit deren Präsenz zu detektieren und schließlich eine Positionsbestimmung durchführen zu können. Hierbei sind dem Fachmann aus der Literatur zahlreiche unterschiedliche Verfahren bekannt, wie etwa Verfahren, welche auf der Analyse und Extraktion von Texturen in einem Bild basieren, Verfahren, welche auf der Analyse und Interpolation von Bewegung über mehrere aufeinanderfolgende Bilder basieren, sowie modellbasierte Ansätze, welche im Kontext von Personenerkennung entweder monolytisch implementiert sein können, also den menschlichen Körper als Ganzes analysieren, oder teilebasiert, also einzelne Teile des menschlichen Körpers erkennen und diese gemäß geeigneter Hypothesen zu einem ganzen Körper zusammensetzen. Letzterer Ansatz eignet sich insbesondere für den Fall, dass eine partielle Verdeckung einer Person im Bild stattfindet.

Gemäß einer Ausgestaltung der Erfindung werden in einem nächsten Schritt im Rahmen einer Trainingsphase typische Teilkonturen der zu untersuchenden Objekte aus Bildsequenzen abgeleitet und in einer Datenbank gespeichert. Hierfür können zuvor die Texturen im zu untersuchenden Bild z.B. mit anisotropen Filtern hervorgehoben werden, welche typischerweise in 3D-Analysemethoden eingesetzt werden und in der Literatur wohlbekannt sind. Der Vorteil der Methode der Texturerkennung ist, dass in Abhängigkeit vom Anwendungsbereich unterschiedliche Templates hinterlegt werden können, welche die Resultate optimieren; beispielsweise werden für ein Zugangskontrollsystem eines Skigebietes Templates enthaltend einen Helm hinterlegt. Somit existiert ein optimales Set an Detektionsparametern für jeden Anwendungsfall. Da die erzeugten Texturen einfach sind, können diese auch leicht in Echtzeit Transformationen unterzogen werden, wie etwa Stauchungen, Rotationen oder Streckungen. Somit können diese Texturen im Bild auch dann wiedergefunden werden, wenn die Person sich dreht oder die Distanz zu Personen sich ändert.

In einem nächsten Schritt kann ein weiterer Satz an Informationen aus dem Bild erzeugt werden, welcher durch die sogenannte "näherungsweise Textur-Kontext" Analyse gewonnen werden kann. Hierbei werden kleine, wenig komplexe 2D-Strukturen aus den Bildern extrahiert. Typische, bei menschlichen Körpern vorkommende Strukturen dieser Art werden danach in ein Codebook abgelegt. Hierbei können auch Informationen zur gegenseitigen lokalen Korrelation im Bild zwischen den einzelnen Strukturen hinterlegt werden. Mit geeigneten statistischen Methoden werden anschließend diese Einzelstrukturen auf Ihre Lage gegeneinander geprüft. Ergibt diese Prüfung, dass es auf Grund der Lage der Strukturen zueinander und der individuellen Eigenschaften der Strukturen im Einzelnen plausibel ist, dass eine Menge an diesen Strukturen eine menschliche Person beschreiben, so wird diese Submenge als solche gekennzeichnet und der entsprechende Bildbereich erhält eine (virtuelle) Boundingbox zur Indikation der Anwesenheit einer menschlichen Person.

In einem weiteren Schritt können obige Ansätze kombiniert werden, indem z.B. ein maximum a posteriori Schätzverfahren angewandt wird, welches dem Fachmann in diesem Bereich wohlbekannt ist. Das Ergebnis liefert einen robusten Schätzer für die individuelle Position und auch Lage (z.B. Körperhaltung, Körperdrehung, Kopfdrehen, Armausrichtung) der Personen im Bild.

Diese Information kann anschließend unter Kenntnis der Umgebung und der Lage der Kamera in absolute x-y-(z)-Koordinaten in der realen Umgebung umgewandelt werden, welche in weiterer Folge als Basis für die Lokalisierung, Zählung und Verfolgung (Tracking) von Personen mittels des zweiten, bildgebenden Verfahrens genutzt werden können.

In einer weiteren Ausprägung des Verfahrens kann die bestehende Infrastruktur gleichermaßen zur Detektion von nicht-Personen im Bild, d.h. von Gegenständen wie beispielsweise Koffern, Steinen, Schneeanhäufungen verwendet werden. Hiermit kann der Betreiber des Zugangskontrollsystems vor Gefahren, z.B. Stolpergefahr, Staugefahr, unautorisiertem Abstellen von Gegenständen etc. im Eingangsbereich automatisch gewarnt werden und in weiterer Folge die Benutzer warnen.

Durch die erfindungsgemäße Konzeption werden die Datenträger bzw. die mobilen elektronischen Geräte, auf denen eine gültige Zugangsberechtigung oder eine ID, der eine Zugangsberechtigung eindeutig zugeordnet ist, abgelegt sind und somit die Personen, welche zumindest eine gültige Zugangsberechtigung in Form eines Datenträgers oder eines mobilen elektronischen Gerätes, auf dem eine gültige Zugangsberechtigung oder eine ID, der eine Zugangsberechtigung eindeutig zugeordnet ist, abgelegt ist bei sich tragen, und sämtliche im Eingangsbereich anwesenden Personen in Echtzeit räumlich erfasst, so dass im Server eine ID-Map und eine People-Map erstellt werden.

Die ID-Map entspricht der räumlichen Verteilung der Personen, welche zumindest eine gültige Zugangsberechtigung in Form eines Datenträgers oder eines mobilen elektronischen Gerätes, auf dem eine gültige Zugangsberechtigung oder eine ID, der eine Zugangsberechtigung eindeutig zugeordnet ist, abgelegt ist, bei sich tragen, wobei die People-Map der räumlichen Verteilung sämtlicher Personen im Eingangsbereich des Zugangskontrollsystems entspricht.

In einem nächsten Schritt werden im Server die von den beiden Verfahren gelieferten Daten miteinander verglichen, um im Rahmen eines "Matchings" der ID-Map mit der People-Map die Personen, welche zumindest eine gültige Zugangsberechtigung in Form eines Datenträgers oder eines mobilen elektronischen Gerätes, auf dem eine gültige Zugangsberechtigung oder eine ID, der eine Zugangsberechtigung eindeutig zugeordnet ist, abgelegt ist, bei sich tragen, zu identifizieren. Hierbei wird ermittelt, ob die ermittelte Position einer mittels des zweiten, bildgebenden Verfahrens erfassten Person einer mittels des ersten Verfahrens ermittelten Position eines Datenträgers bzw. eines mobilen elektronischen Gerätes, auf dem eine gültige Zugangsberechtigung oder eine ID, der zumindest eine gültige Zugangsberechtigung eindeutig zugeordnet ist, abgelegt ist, entspricht. Ist dies nicht der Fall, so wird eine Person erkannt und lokalisiert, welche keine bzw. keine gültige Zugangsberechtigung hat.

Durch das Matching, d.h. der Zuordnung der mittels des ersten Verfahrens erfassten gültigen Zugangsberechtigungen zu den mittels des zweiten Verfahrens erfassten Personen wird eine sogenannte Overlay-Map erstellt, welche die räumliche Verteilung der Zuordnung und der nicht zugeordneten Personen und/oder Zugangsberechtigungen darstellt.

Die parallele Durchführung der Erfassung der Datenträger bzw. der mobilen elektronischen Geräte, auf denen eine gültige Zugangsberechtigung oder eine ID, der eine Zugangsberechtigung eindeutig zugeordnet ist, abgelegt ist mittels des ersten Verfahrens und der anwesenden Personen mittels des zweiten Verfahrens und das anschließende Matching werden permanent durchgeführt, so dass diese Informationen in Echtzeit vorliegen und ein Bewegungsprofil der Personen, die als Personen ohne eine gültige Zugangsberechtigung identifiziert worden sind und der Personen, die eine gültige Zugangsberechtigung in Form eines Datenträgers oder eines mobilen elektronischen Gerätes, auf dem eine gültige Zugangsberechtigung oder eine ID, der eine Zugangsberechtigung eindeutig zugeordnet ist, abgelegt ist bei sich tragen, erstellt wird.

Erfindungsgemäß werden im Server die Bewegungsprofile gemäß der Overlay -Map in Echtzeit ausgewertet, wobei, wenn bei einem Zugangskontrollsystem, welches keine Zugangskontrollvorrichtungen umfassend Sperren aufweist, Personen, die gemäß der Overlay-Map über eine gültige Zugangsberechtigung in Form eines Datenträgers oder eines mobilen elektronischen Gerätes, auf dem eine gültige Zugangsberechtigung oder eine ID, der eine Zugangsberechtigung eindeutig zugeordnet ist, abgelegt ist bei sich tragen, eine vorgegebene virtuelle Linie passieren, was dem Zutritt in das vom Zugangskontrollsystem überwachte Gebiet entspricht, ein entsprechender Eintrag in einem Server des Zugangskontrollsystems erstellt wird.

Wenn gemäß der Overlay-Map als Personen ohne eine gültige Zugangsberechtigung identifizierte Personen die vorgegebene virtuelle Linie passieren, wird im System ein unberechtigter Zutritt erkannt. Auf diese Weise wird ein Zugangskontrollsystem ohne Sperren realisiert. Ferner entfallen auch die entsprechenden Zugangskontrollvorrichtungen.

Für den Fall eines unberechtigten Zutritts einer Person kann ein Tracking dieser Person mittels zumindest einer weiteren Kamera durchgeführt werden, wobei anhand der Tracking-Informationen vorzugsweise eine manuelle Zugangskontrolle durchgeführt wird. Im Rahmen weiterer Ausgestaltungen kann diese Person mittels eines Laser- bzw. Lichtstrahls markiert werden, um auf diese Weise das Auffinden der Person seitens des Personals zu vereinfachen. Gemäß einer weiteren Ausgestaltung kann, wenn ein unberechtigter Zutritt erkannt wird, eine Umleitung einer Personengruppe, die Person ohne gültige Zugangsberechtigung beinhaltend, durch Aktivierung von Mitteln zur Umleitung von Personen, beispielsweise von Personenschleusen, durchgeführt werden, wobei die Personengruppe derart umgeleitet wird, dass Mittel zur Kontrolle der Zugangsberechtigungen umfassend eine Zugangskontrollvorrichtung mit mechanischer Sperre, wobei die Zugangsberechtigungen berührungslos auslesbar sind, passiert werden. Die Mittel zur Umleitung von Personen können automatisch oder manuell durch betätigen eines Schalters oder einer mechanischen Vorrichtung aktiviert werden.

Das Zugangskontrollsystem umfasst demnach zumindest drei im Eingangsbereich vorgesehene, mit einem Server verbundene Leseeinrichtungen, die den gesamten Eingangsbereich abdecken, zum berührungslosen Erfassen und Auslesen von auf Datenträgern oder mobilen elektronischen Geräten abgelegten Zugangsberechtigungen oder IDs, denen zumindest eine Zugangsberechtigung eindeutig zugeordnet ist sowie mehrere im Eingangsbereich des Zugangskontrollsystems mit dem Server verbundene Kameras, welche den gesamten Eingangsbereich abdecken. Für den Fall, dass mehrere Eingangsbereiche vorgesehen sind, umfasst das Zugangskontrollsystem pro Eingangsbereich zumindest Leseeinrichtungen und mehrere Kameras. Um einen unberechtigten Zutritt über einen Ausgangsbereich zu vermeiden, sind die Ausgangsbereiche Eingangsbereiche im Sinne der Erfindung.

Im Rahmen einer Weiterbildung der Erfindung kann für den Fall von personenbezogenen Zugangsberechtigungen, welche mittels des ersten Verfahrens erfasst werden, mittels des zweiten, bildgebenden Verfahrens ermittelt werden, ob diese Zugangsberechtigungen unberechtigterweise von anderen Personen missbraucht werden. Dies erfolgt über einen Vergleich eines in einer Datenbank abgelegten Fotos der berechtigten Person mit einer mittels des zweiten Verfahrens erstellten Aufnahme der Person, die eine auf einem Datenträger oder einem mobilen elektronischen Gerät abgelegte personenbezogene Zugangsberechtigung oder ID, der zumindest eine personenbezogene Zugangsberechtigung eindeutig zugeordnet ist, bei sich trägt. Analog zu dieser Vorgehensweise kann festgestellt werden, ob eine erwachsene Person mit einer Zugangsberechtigung für ein Kind diese Zugangsberechtigung missbraucht.

Im Rahmen einer Weiterbildung der Erfindung kann das "Matching" der ID-Map mit der People-Map mittels eines Maximum-Likelihood-Ansatzes (ML) und optional zusätzlich mittels der Kombination eines Maximum-Likelihood-Ansatzes (ML) mit Fuzzy Logic (FL) optimiert werden.

Hierbei werden aus der People-Map und der ID-Map Karten generiert, welche neben der Positionen der erfassten Personen bzw. der erfassten Datenträger oder der erfassten mobilen elektronischen Geräte, auf denen eine gültige Zugangsberechtigung oder eine ID, der eine Zugangsberechtigung eindeutig zugeordnet ist, abgelegt sind eine daraus abgeleitete statistische Zuverlässigkeit dieser Positionen enthalten. Die statistische Zuverlässigkeit kann beispielsweise anhand aus der Erfahrung bekannter Standardabweichungen und/oder systematischer, von der Umgebung abzuleitender Fehler des Verfahrens berechnet werden.

Anschließend werden die beiden Karten mittels eines Maximum-Likelihood-Ansatzes bestmöglich im Sinne von statistischer Wahrscheinlichkeit im Rahmen eines Matchings zur Deckung gebracht, wobei Wahrscheinlichkeiten der Übereinstimmung der Lokalisierungsergebnisse beider Karten berechnet werden, wobei zunächst die Punkte mit den höchsten gegenseitigen Wahrscheinlichkeiten miteinander verknüpft werden.

Gemäß einer Weiterbildung des Verfahrens können weitere Informationen über die Beziehung einzelner IDs oder Zugangsberechtigungen zueinander vorliegen, z.B. kann eine Gruppe von IDs eine Familie darstellen, welche bevorzugt gemeinsam auftritt. Weitere "weiche" Faktoren dieser Art können helfen, die Präzision des Ansatzes mittels Fuzzy Logic zu erhöhen. Geeignet modelliert können hierbei unterschiedliche Informationen miteinander verknüpft werden. Beispielsweise kann die Information "Vater und Sohn besitzen jeweils passende IDs und stehen bevorzugt nahe beieinander" zusammen mit der Information "es befindet sich eine kleine Person mit passender ID im Eingangsbereich" in Zuordnungswahrscheinlichkeiten gemappt werden, wobei derartige Verknüpfungen in Kombination mit dem Matching gemäß dem Maximum-Likelihood-Ansatz ein zuverlässigeres Matching der People-Map mit der ID-Map ermöglichen.

Des Weiteren kann gemäß der Erfindung zum Optimieren des Matchings der People-Map mit der ID-Map nicht nur die aktuelle Position, sondern auch der zeitliche Verlauf der People-Map und der ID-Map herangezogen werden. Wenn sich im zeitlichen Verlauf erfasste Personen und erfasste Datenträger oder mobile elektronische Geräte in einem vergleichbaren Muster bewegen, so können diese zuverlässiger miteinander verlinkt werden. Hierbei kann das Heranziehen der zeitlichen Verläufe der People-Map und der ID-Map zusätzlich gemäß dem Maximum-Likelihood-Ansatz optimiert werden, um statistische Abweichungen über die Zeit, beispielsweise eine Abschattung im Bild des bildgebenden Verfahrens und/oder Abschattung in der Frequenz des ersten Verfahrens, Störungen der Wireless Umgebung durch Fremdgeräte, wetterbedingt ungünstige optische Verhältnisse, wie z.B. Schneefall, anhand der Wahrscheinlichkeit des Auftretens kompensieren zu können.

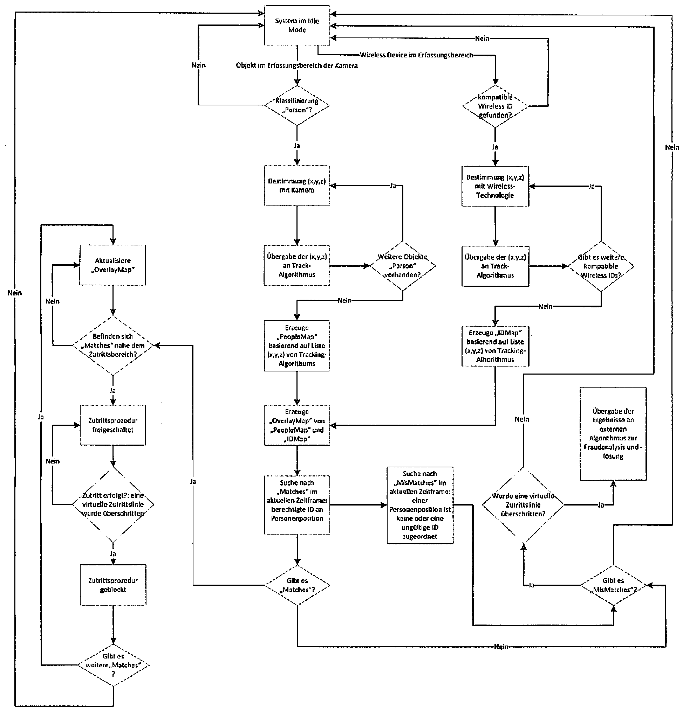

Die Erfindung wird anhand der beigefügten Figur, welche ein Flussdiagramm einer möglichen Ausgestaltung des Verfahrens darstellt, beispielhaft näher erläutert.

Zu Beginn des Verfahrens befindet sich das System, in dem das Verfahren implementiert ist, im Idle modus (Leerlaufmodus), wobei, wenn von einer Vorrichtung zur Durchführung des zweiten, bildgebenden Verfahrens, d.h. von einer Kamera, im Erfassungsbereich der Kamera, der einem Teil des Eingangsbereiches des Zugangskontrollsystems entspricht, ein Objekt detektiert wird, welches als Person klassifiziert wird, was beispielsweise mittels der beschriebenen Analyse und Extraktion von Texturen erfolgen kann, die aktuelle Position der Person erfasst und an einen Algorithmus zur Erzeugung der People-Map, übergeben wird, wobei diese Schritte wiederholt werden, bis sämtliche aktuell als Personen klassifizierte Objekte im Erfassungsbereich der Kamera erfasst sind und deren aktuelle Position an den Algorithmus zur Erzeugung der People-Map, übergeben worden ist.

Unmittelbar nach diesem Schritt oder wie anhand der beigefügten Figur veranschaulicht, gleichzeitig mit der Erfassung der Personen durch das bildgebende Verfahren werden mittels zumindest drei Leseeinrichtungen, die im Eingangsbereich des Zugangskontrollsystems vorgesehen sind und den gesamten Eingangsbereich abdecken, die Datenträger oder die mobilen elektronischen Geräte, auf denen eine gültige Zugangsberechtigung oder eine ID, der eine Zugangsberechtigung eindeutig zugeordnet ist, abgelegt sind, berührungslos (wireless) erfasst und deren aktuelle Position durch Trilateration bzw. Multilateration ermittelt, die an einen Algorithmus zur Erzeugung der People-Map übergeben wird. Durch die Erfassung der Datenträger oder der mobilen elektronischen Geräte, auf denen eine gültige Zugangsberechtigung oder eine ID, der eine Zugangsberechtigung eindeutig zugeordnet ist, abgelegt sind werden implizit die Personen erfasst, welche zumindest eine gültige Zugangsberechtigung in Form eines Datenträgers oder eines mobilen elektronischen Gerätes, auf dem eine gültige Zugangsberechtigung oder eine ID, der eine Zugangsberechtigung eindeutig zugeordnet ist, abgelegt ist, bei sich tragen.

In einem nächsten Schritt werden im Server die von den beiden Verfahren gelieferten Daten miteinander verglichen, um im Rahmen eines "Matchings" der ID-Map mit der People-Map die Personen, welche eine gültige Zugangsberechtigung in Form eines Datenträgers oder eines mobilen elektronischen Gerätes, auf dem eine gültige Zugangsberechtigung oder eine ID, der eine Zugangsberechtigung eindeutig zugeordnet ist, abgelegt ist, bei sich tragen, zu identifizieren. Hierbei wird ermittelt, ob die ermittelte Position einer mittels des zweiten, bildgebenden Verfahrens erfassten Person einer mittels des ersten Verfahrens ermittelten Position eines Datenträgers bzw. eines mobilen elektronischen Gerätes, auf dem eine gültige Zugangsberechtigung oder eine ID, der zumindest eine gültige Zugangsberechtigung eindeutig zugeordnet ist, entspricht. Ist dies nicht der Fall, so wird eine Person erkannt und lokalisiert, welche keine bzw. keine gültige Zugangsberechtigung hat.

Durch das Matching, d.h. der Zuordnung der mittels des ersten Verfahrens erfassten gültigen Zugangsberechtigungen zu den mittels des zweiten Verfahrens erfassten Personen wird eine Overlay-Map erstellt, welche in Echtzeit die räumliche Verteilung der Zuordnung und der nicht zugeordneten Personen und/oder Zugangsberechtigungen darstellt.

Die parallele Durchführung der Erfassung der Datenträger bzw. der mobilen elektronischen Geräte, auf denen eine gültige Zugangsberechtigung oder eine ID, der eine Zugangsberechtigung eindeutig zugeordnet ist, abgelegt ist mittels des ersten Verfahrens und der anwesenden Personen mittels des zweiten Verfahrens und das anschließende Matching werden permanent durchgeführt, so dass diese Informationen in Echtzeit vorliegen und ein Bewegungsprofil der Personen, die als Personen ohne eine gültige Zugangsberechtigung identifiziert worden sind und der Personen, die eine gültige Zugangsberechtigung bei sich tragen, erstellt wird.

Im Server werden die Bewegungsprofile gemäß der Overlay-Map in Echtzeit ausgewertet, wobei, wenn bei einem Zugangskontrollsystem, welches keine Zugangskontrollvorrichtungen umfassend Sperren aufweist, Personen, die gemäß der Overlay-Map eine gültige Zugangsberechtigung in Form eines Datenträgers oder eines mobilen elektronischen Gerätes, auf dem eine gültige Zugangsberechtigung oder eine ID, der eine Zugangsberechtigung eindeutig zugeordnet ist, abgelegt ist, bei sich tragen, eine vorgegebene virtuelle Linie passieren, was dem Zutritt in das vom Zugangskontrollsystem überwachte Gebiet entspricht, gemäß einer Zutrittsprozedur, die freigeschaltet wird, wenn gemäß der Overlay-Map Personen mit einer gültigen Zugangsberechtigung sich nahe dem Zutrittsbereich, d.h. der virtuellen Linie befinden ein entsprechender Eintrag für diese Zugangsberechtigung in einem Server des Zugangskontrollsystems erstellt wird. Nach dem Passieren der virtuellen Linie wird die Zutrittsprozedur für diese Zugangsberechtigung für einen vorgegebene Zeitdauer blockiert, so dass ein erneutes Passieren der virtuellen Linie mit dieser Zugangsberechtigung als Missbrauch eingestuft wird.

Wenn gemäß der Overlay-Map als Personen ohne eine gültige Zugangsberechtigung identifizierte Personen die vorgegebene virtuelle Linie passieren, wird im System ein unberechtigter Zutritt erkannt. Auf diese Weise wird ein Zugangskontrollsystem ohne Sperren realisiert. Die Daten werden an einen weiteren, externen Algorithmus zur Missbrauchsanalyse übergeben.

## Patentansprüche

1. Verfahren zur Kontrolle von Zugangsberechtigungen durch ein Zugangskontrollsystem, wobei auf Datenträgern oder mobilen elektronischen Geräten abgelegte Zugangsberechtigungen oder IDs, denen zumindest eine Zugangsberechtigung eindeutig zugeordnet ist, mittels mit einem Server verbundener Leseeinrichtungen berührungslos erfasst und ausgelesen werden, wobei in jedem Eingangsbereich des Zugangskontrollsystems zumindest drei Leseeinrichtungen vorgesehen sind, welche den gesamten Eingangsbereich abdecken, wobei in jedem Eingangsbereich des Zugangskontrollsystems mehrere mit dem Server verbundene Kameras vorgesehen sind, welche den gesamten Eingangsbereich abdecken, wobei im Rahmen eines ersten Verfahrens mittels der Erfassung der Datenträger oder der mobilen elektronischen Geräte, auf denen eine gültige Zugangsberechtigung oder eine ID, der eine gültige Zugangsberechtigung eindeutig zugeordnet ist, abgelegt ist durch zumindest drei Leseeinrichtungen durch Trilateration bzw. Multilateration die aktuelle Position der Datenträger bzw. mobilen elektronischen Geräte ermittelt wird, und wobei mittels eines zweiten, bildgebenden Verfahrens, welches parallel zum ersten Verfahren durchgeführt wird, mittels der Kameras die aktuelle Position sämtlicher im Eingangsbereich des Zugangskontrollsystems anwesenden Personen erfasst wird, wodurch die Personen, welche zumindest eine gültige Zugangsberechtigung in Form eines Datenträgers oder eines mobilen elektronischen Gerätes, auf dem eine gültige Zugangsberechtigung oder eine ID, der eine Zugangsberechtigung eindeutig zugeordnet ist, abgelegt ist, bei sich tragen und sämtliche im Eingangsbereich anwesenden Personen in Echtzeit räumlich erfasst werden, so dass im Server eine ID-Map und eine People-Map erstellt wird, wobei die ID-Map der räumlichen Verteilung der Personen, welche zumindest eine gültige Zugangsberechtigung in Form eines Datenträgers oder eines mobilen elektronischen Gerätes, auf dem eine gültige Zugangsberechtigung oder eine ID, der eine Zugangsberechtigung eindeutig zugeordnet ist, abgelegt ist, bei sich tragen entspricht und die People-Map der räumlichen Verteilung sämtlicher Personen im Eingangsbereich des Zugangskontrollsystems entspricht, wobei im Server die von den beiden Verfahren gelieferten Daten miteinander verglichen werden, um im Rahmen eines "Matchings" der ID-Map mit der People-Map eine Overlay-Map zu erstellen, bei der die Personen, welche zumindest eine gültige Zugangsberechtigung in Form eines Datenträgers oder eines mobilen elektronischen Gerätes, auf dem eine gültige Zugangsberechtigung oder eine ID, der eine Zugangsberechtigung eindeutig zugeordnet ist, abgelegt ist, bei sich tragen und die Personen ohne eine gültige Zugangsberechtigung identifiziert sind, wobei ermittelt wird, ob die ermittelte Position einer mittels des zweiten, bildgebenden Verfahrens erfassten Person einer mittels des ersten Verfahrens ermittelten Position eines Datenträgers bzw. eines mobilen elektronischen Gerätes, auf dem eine gültige Zugangsberechtigung oder eine ID, der zumindest eine gültige Zugangsberechtigung eindeutig zugeordnet ist, abgelegt ist entspricht, wobei, wenn dies nicht der Fall ist, eine Person erkannt und lokalisiert wird, welche keine gültige Zugangsberechtigung hat, wobei die Bewegungsprofile gemäß der Overlay-Map in Echtzeit ausgewertet werden, wobei wenn Personen, die gemäß der Overlay-Map eine gültige Zugangsberechtigung bei sich tragen, eine vorgegebene virtuelle Linie passieren, was dem Zutritt in das vom Zugangskontrollsystem überwachte Gebiet entspricht, ein entsprechender Eintrag in einem Server des Zugangskontrollsystems erstellt wird und wobei wenn gemäß der Overlay-Map als Personen ohne eine gültige Zugangsberechtigung identifizierte Personen die vorgegebene virtuelle Linie passieren, ein unberechtigter Zutritt erkannt wird, wodurch ein Zugangskontrollsystem ohne Sperren realisiert wird.

2. Verfahren zur Kontrolle von Zugangsberechtigungen durch ein Zugangskontrollsystem, nach Anspruch 1, wobei für den Fall eines unberechtigten Zutritts ein Tracking der Person ohne eine gültige Zugangsberechtigung mittels zumindest einer weiteren Kamera durchgeführt wird, wobei anhand der Tracking-Informationen eine manuelle Zugangskontrolle durchgeführt wird oder dass wenn ein unberechtigter Zutritt einer Person erkannt wird, eine Umleitung einer Personengruppe,die Person ohne gültige Zugangsberechtigung beinhaltend durch Aktivierung von Mitteln zur Umleitung von Personen durchgeführt wird, wobei die Personengruppe derart umgeleitet wird, dass Mittel zur Kontrolle der Zugangsberechtigungen umfassend eine Zugangskontrollvorrichtung mit mechanischer Sperre, wobei die Zugangsberechtigungen berührungslos auslesbar sind, passiert werden.

3. Verfahren zur Kontrolle von Zugangsberechtigungen durch ein Zugangskontrollsystem, nach Anspruch 1 oder 2, wobei für den Fall von personenbezogenen Zugangsberechtigungen, welche mittels des ersten Verfahrens erfasst werden, mittels des zweiten, bildgebenden Verfahrens ermittelt wird, ob diese Zugangsberechtigungen unberechtigterweise von anderen Personen missbraucht werden, was über einen Vergleich eines in einer Datenbank abgelegten Fotos der berechtigten Person mit einer mittels des zweiten Verfahrens erstellten Aufnahme der Person, die die auf einem Datenträger oder einem mobilen elektronischen Gerät abgelegte personenbezogene Zugangsberechtigung oder ID, der zumindest eine gültige personenbezogene Zugangsberechtigung eindeutig zugeordnet ist, bei sich trägt.

4. Verfahren zur Kontrolle von Zugangsberechtigungen durch ein Zugangskontrollsystem, nach Anspruch 1 oder 2, wobei das "Matching" der ID-Map mit der People-Map durch eine Kombination von Maximum-Likelihood-Ansätzen (ML) und Fuzzy Logic (FL) optimiert wird, wobei aus der People-Map und der ID-Map Karten generiert werden, welche neben der Positionen der erfassten Personen bzw. der erfassten Datenträger oder der erfassten mobilen elektronischen Geräte, auf denen eine gültige Zugangsberechtigung oder eine ID, der eine Zugangsberechtigung eindeutig zugeordnet ist, abgelegt sind eine daraus abgeleitete statistische Zuverlässigkeit dieser Positionen enthalten, wobei die ID-Map und die People-Map mittels eines Maximum-Likelihood-Ansatzes bestmöglich im Sinne von statistischer Wahrscheinlichkeit im Rahmen eines Matchings zur Deckung gebracht werden, wobei Wahrscheinlichkeiten der Übereinstimmung der Lokalisierungsergebnisse beider Karten berechnet werden und wobei die Punkte mit den höchsten gegenseitigen Wahrscheinlichkeiten miteinander verknüpft werden.

5. Verfahren zur Kontrolle von Zugangsberechtigungen durch ein Zugangskontrollsystem, nach Anspruch 4, wobei zum Optimieren des Matchings der People-Map mit der ID-Map der zeitliche Verlauf der People-Map und der ID-Map herangezogen werden, wobei, wenn sich im zeitlichen Verlauf erfasste Personen und erfasste Datenträger oder mobile elektronische Geräte in einem vergleichbaren Muster bewegen, diese zuverlässiger miteinander verlinkt werden.

6. Verfahren zur Kontrolle von Zugangsberechtigungen durch ein Zugangskontrollsystem, nach einem der vorangehenden Ansprüche, wobei das erste Verfahren ein Verfahren ist, im Rahmen dessen Datenträger oder mobile elektronische Geräte über den Bluetooth Low Energy-Standard (BLE) im Rahmen eines "Broadcasting" in regelmäßigen Abständen eine ID, der zumindest eine Zugangsberechtigung eindeutig zugeordnet ist oder Daten einer Zugangsberechtigung senden, welche von mit einem Computer umfassend eine CPU und Speichermittel verbundenen BLE Sende-Empfangseinheiten in Reichweite des mobilen elektronischen Gerätes oder des Datenträgers empfangen wird, wobei die Lokalisierung der mobilen elektronischen Geräte oder der Datenträger dadurch erfolgt, dass anhand einer Referenzsignalstärke, die in der Regel der Signalstärke in einem Meter Entfernung entspricht und die als Information im Signal des mobilen elektronischen Geräts oder des Datenträgers enthalten ist oder in Abhängigkeit vom mobilen elektronischen Gerät oder vom Datenträger in einer im Computer gespeicherten Tabelle abgelegt ist, der Abstand zwischen dem mobilen elektronischen Gerät und den BLE Sende-Empfangseinheiten ermittelt wird, wobei anschließend eine Trilateration bzw. bei mehr als drei BLE Sende-Empfangseinheiten eine Multilateration durchgeführt wird.

7. Verfahren zur Kontrolle von Zugangsberechtigungen durch ein Zugangskontrollsystem, nach einem der vorangehenden Ansprüche 1-5, wobei das zweite, bildgebende Verfahren ein Verfahren zur Personenerkennung mittels 3D-Kameras, Stereokameras oder PMD-Kameras, ist, welches mittels Bildanalyse eine genaue Positionserfassung der Personen ermöglicht.

8. Verfahren zur Kontrolle von Zugangsberechtigungen durch ein Zugangskontrollsystem, nach einem der vorangehenden Ansprüche 1-5, wobei zur Durchführung des zweiten, bildgebenden Verfahrens Trinocularkameras verwendet werden, welche jeweils drei Einzelkameras unterschiedlichen Abstands zueinander umfassen, die in einer Reihe angeordnet sind, wobei jeweils zwei dieser Einzelkameras als Stereokamera agieren, wobei die unterschiedlichen Kombinationsmöglichkeiten der Einzelkameras zu einer Stereokamera eine breite Variation der möglichen Brennweiten und somit eine optimale Analyse des Eingangsbereiches des Zugangskontrollsystems ermöglichen.

## Claims

1. A method for controlling access rights by means of an access control system, wherein access rights or IDs, to which at least one access right is uniquely assigned, which are stored on data carriers or mobile electronic devices are detected and read out contactlessly by means of reading devices which are connected to a server, wherein at least three reading devices are provided in each entrance area of the access control system, which reading devices cover the entire entrance area, wherein a plurality of cameras that are connected to the server are provided in each entrance area of the access control system, which cameras cover the entire entrance area, wherein, in the context of a first method, the current position of the data carriers or mobile electronic devices is detected by means of the detection of the data carriers or the mobile electronic devices, on which a valid access right or an ID, to which a valid access right is uniquely assigned, is stored, by means of at least three reading devices by trilateration or multilateration, and wherein, by means of a second imaging method which is carried out in parallel with the first method, the current position of all of the people present in the entrance area of the access control system is detected by means of the cameras, as a result of which the people who are carrying with them at least one access right in the form of a data carrier or a mobile electronic device, on which a valid access right or an ID, to which an access right is uniquely assigned, is stored, and all of the people present in the entrance area are detected spatially in real time, so that an ID map and a people map is created on the server, wherein the ID map corresponds to the spatial distribution of the people who are carrying with them at least one valid access right in the form of a data carrier or a mobile electronic device, on which a valid access right or an ID, to which an access right is uniquely assigned, is stored, and the people map corresponds to the spatial distribution of all of the people in the entrance area of the access control system, wherein the data delivered by the two methods are compared with one another on the server, in order to create an overlay map in the context of a "matching" of the ID map with the people map, in which overlay map the people who are carrying with them at least one valid access right in the form of a data carrier or a mobile electronic device, on which a valid access right or an ID, to which an access right is uniquely assigned, is stored, and the people without a valid access right are identified, wherein it is determined whether the determined position of a person detected by means of the second imaging method corresponds to a position, determined by means of the first method, of a data carrier or a mobile electronic device, on which a valid access right or an ID, to which at least one valid access right is uniquely assigned, is stored, wherein, if this is not the case, a person is detected and localized, who has no valid access right, wherein the movement profiles are evaluated according to the overlay map in real time, wherein, if people, who are carrying with them a valid access right according to the overlay map, pass a predetermined virtual line, which corresponds to access to the zone monitored by the access control system, a corresponding entry is created on a server of the access control system, and wherein if people, who are identified as people without a valid access right according to the overlay map, pass the predetermined virtual line, an unauthorized access is detected, as a result of which an access control system without barriers is realized.

2. The method for controlling access rights by means of an access control system according to Claim 1, wherein, for the case of an unauthorized access, tracking of the person without a valid access right is carried out by means of at least one further camera, wherein a manual access control is carried out on the basis of the tracking information or if an unauthorized access of a person is detected, a diversion of a group of people containing the person without valid access right is carried out by activating means for diverting people, wherein the group of people is diverted in such a manner that means for controlling the access rights, comprising an access control device with mechanical barrier, are passed, wherein the access rights can be read out contactlessly.

3. The method for controlling access rights by means of an access control system according to Claim 1 or 2, wherein for the case of personal access rights which are detected by means of the first method, it is determined by means of the second imaging method, whether these access rights are being misused without authorization by other people, which takes place by means of a comparison of a photo of the authorized person, which is stored in a database, with an image, created by means of the second method, of the person who is carrying with them the personal access right or ID, to which at least one valid personal access right is uniquely assigned, which is stored on a data carrier or a mobile electronic device.

4. The method for controlling access rights by means of an access control system according to Claim 1 or 2, wherein the "matching" of the ID map with the people map is optimized by means of a combination of maximum likelihood approaches (ML) and fuzzy logic (FL), wherein maps are generated from the people map and the ID map, which, in addition to the positions of the detected people or the detected data carriers or the detected mobile electronic devices on which a valid access right or an ID, to which an access right is uniquely assigned, are stored, contain a statistical reliability of these positions derived therefrom, wherein the ID map and the people map are brought into congruence by means of a maximum likelihood approach in the best manner possible in terms of statistical probability in the context of matching, wherein probabilities of the matching of the localization results of both maps are calculated, and wherein the points with the highest mutual probabilities are linked with one another.

5. The method for controlling access rights by means of an access control system according to Claim 4, wherein the temporal course of the people map and the ID map are called upon for optimizing the matching of the people map with the ID map, wherein, if people detected and data carriers or mobile electronic devices detected in the temporal course move in a comparable pattern, these are more reliably linked with one another.

6. The method for controlling access rights by means of an access control system according to one of the preceding claims, wherein the first method is a method, in the context of which data carriers or mobile electronic devices transmit an ID, to which at least one access right is uniquely assigned, or data of an access right via the Bluetooth low energy standard (BLE) in the context of "broadcasting" at regular intervals, which is received by BLE transceiver units in range of the mobile electronic device or the data carrier, which transceiver units are connected to a computer comprising a CPU and storage means, wherein the localization of the mobile electronic devices or the data carriers takes place in that, on the basis of a reference signal strength, which generally corresponds to the signal strength at a distance of one metre and which is contained as information in the signal of the mobile electronic device or the data carrier or is stored in a table saved on the computer as a function of the mobile electronic device or the data carrier, the distance between the mobile electronic device and the BLE transceiver units is determined, wherein a trilateration, or in the case of more than three BLE transceiver units, a multilateration is subsequently carried out.

7. The method for controlling access rights by means of an access control system according to one of the preceding Claims 1-5, wherein the second imaging method is a method for person recognition by means of 3D cameras, stereo cameras or PMD cameras, which enables a precise position detection of the people by means of image analysis.

8. The method for controlling access rights by means of an access control system according to one of the preceding Claims 1-5, wherein trinocular cameras are used for carrying out the second imaging method, which in each case comprise three individual cameras at a different distance from one another, which are arranged in a row, wherein in each case, two of these individual cameras act as a stereo camera, wherein the different combination possibilities of the individual cameras to form a stereo camera enable a broad variation of possible focal distances and thus an optimum analysis of the entrance area of the access control system.

## Revendications

1. Procédé de contrôle d'autorisations d'accès par un système de contrôle d'accès pour personnes ou véhicules automobiles, sachant que des autorisations d'accès ou Identifications (ID) déposées sur des supports de données ou des appareils électroniques mobiles, auxquelles est clairement attribuée au moins une autorisation d'accès, sont saisies et lues sans contact au moyen de systèmes de lecture reliés à un serveur, sachant que dans chaque zone d'entrée du système de contrôle d'accès au moins trois systèmes de lecture sont prévus, lesquels couvrent la zone d'entrée entière, sachant que dans chaque zone d'entrée du système de contrôle d'accès, plusieurs caméras reliées au serveur sont prévues, lesquelles couvrent la zone d'entrée entière, sachant que dans le cadre d'un premier procédé la position actuelle des supports de données ou des appareils électroniques mobiles est déterminée par trilatération ou multilatération par au moins trois système de lecture au moyen de la saisie des supports de données ou des appareils électroniques mobiles sur lesquels est déposée une autorisation d'accès valable ou une ID, à laquelle est clairement attribuée une autorisation d'accès valable et sachant qu'au moyen d'un deuxième procédé d'imagerie, lequel est exécuté parallèlement au premier procédé, la position actuelle de toutes les personnes présentent dans la zone d'entrée du système de contrôle d'accès est saisie au moyen des caméras, ce par quoi les personnes qui portent sur elles au moins une autorisation d'accès valable sous la forme d'un support de données ou d'un appareil électronique mobile sur lequel est déposée une autorisation d'accès valable ou une ID, à laquelle est clairement attribuée une autorisation d'accès et toutes les personnes présentes dans la zone d'entrée sont saisies dans l'espace en temps réel de telle manière qu'un topogramme-ID (ID-Map) et un topogramme-Personnes (People-Map) sont établis, sachant que le topogramme-ID correspond à la répartition spatiale des personnes, qui portent sur elles au moins une autorisation d'accès valable sous la forme d'un support de données ou d'un appareil électronique mobile sur lequel est déposée une autorisation d'accès valable ou une ID, à laquelle est clairement attribuée une autorisation d'accès et le topogramme-Personnes correspond à la répartition spatiale de toutes les personnes dans la zone d'entrée du système de contrôle d'accès, sachant que dans le serveur, les données fournies par les deux procédés sont comparées entre elles pour établir dans le cadre d'une «concordance» du topogramme-ID avec le topogramme-Personnes un topogramme de Superposition (Overlay-Map) pour lequel les personnes qui portent sur elles au moins une autorisation d'accès valable sous la forme d'un support de données ou d'un appareil électronique mobile sur lequel est déposée une autorisation d'accès valable ou une ID, à laquelle est clairement attribuée une autorisation d'accès et les personnes sans une autorisation d'accès valable sont identifiées, sachant qu'il est déterminé, si la position déterminée d'une personne saisie au moyen du deuxième procédé d'imagerie correspond à une position déterminée au moyen du premier procédé d'un support de données ou d'un appareil électronique mobile sur lequel est déposée une autorisation d'accès valable ou une ID à laquelle est clairement attribuée au moins une autorisation d'accès valable, sachant que, lorsque cela n'est pas le cas, une personne, qui n'a aucune autorisation d'accès valable, est identifiée et localisée, sachant que les profils de mouvement sont évalués en temps réel conformément au topogramme de Superposition, sachant que lorsque les personnes qui portent sur elles une autorisation d'accès valable conformément au topogramme de Superposition, passent une ligne virtuelle prédéfinie, ce qui correspond à l'accès dans le secteur surveillé par le système de contrôle d'accès, un enregistrement correspondant est établi dans un serveur du système de contrôle d'accès et sachant que conformément au topogramme de Superposition des personnes identifiées comme personnes sans une autorisation d'accès valable passent la ligne virtuelle prédéfinie, un accès non autorisé est identifié, un système de contrôle d'accès sans barrages étant de ce fait réalisé.

2. Procédé de contrôle d'autorisations d'accès par un système de contrôle d'accès selon la revendication 1, sachant que dans le cas d'un accès non autorisé, un traçage de la personne sans une autorisation d'accès valable est effectué au moyen d'au moins une autre caméra, sachant qu'à l'aide des informations de traçage un contrôle d'accès manuel est exécuté ou que lorsqu'un accès non autorisé d'une personne est identifié, une déviation d'un groupe de personnes, contenant la personne sans autorisation d'accès est exécuté par activation de moyens de déviation de personnes, sachant que le groupe de personnes est dévié de telle sorte que les moyens de contrôle des autorisations d'accès comprenant un dispositif de contrôle d'accès avec barrage mécanique sont passés, sachant que les autorisations d'accès sont lues sans contact.

3. Procédé de contrôle d'autorisations d'accès par un système de contrôle d'accès selon la revendication 1 ou 2, sachant que pour le cas d'autorisations d'accès se référant à des personnes, lesquelles sont saisies au moyen du premier procédé, il est déterminé au moyen du deuxième procédé d'imagerie, si ces autorisations d'accès sont mal utilisées de façon non autorisée par d'autres personnes, ceci par une comparaison d'une photo de la personne autorisée déposée dans une banque de données avec une deuxième prise de vue établie au moyen du deuxième procédé de la personne qui porte sur elle l'autorisation d'accès se référant à des personnes déposée sur un support de données ou un appareil électronique mobile ou une ID à laquelle est clairement attribuée au moins une autorisation d'accès valable se référant à des personnes.

4. Procédé de contrôle d'autorisations d'accès par un système de contrôle d'accès selon la revendication 1 ou 2, sachant que la « concordance » du topogramme-ID avec le topogramme-Personnes est optimisée par une combinaison d'applications de maximum de vraisemblance (MV) et de logique floue (LF), sachant que des cartes sont générées à partir des topogramme-Personnes et topogramme-ID, lesquelles contiennent en plus des positions des personnes saisies ou des supports de données saisis ou des appareils électroniques mobiles saisis, sur lesquels sont déposées une autorisation d'accès valable ou une ID, à laquelle est clairement attribuée une autorisation d'accès, une fiabilité statistique de ces positions dérivée de celles-ci, sachant que le topogramme-ID et le topogramme-Personnes sont mis en recouvrement au moyen d'une application de maximum de vraisemblance le mieux possible au sens d'une vraisemblance statistique dans le cadre d'une concordance, sachant que les vraisemblances de la concordance des résultats de localisation des deux cartes sont calculées et sachant que les points sont liés entre eux avec les vraisemblances réciproques maximales.

5. Procédé de contrôle d'autorisations d'accès par un système de contrôle d'accès selon la revendication 4, sachant que pour optimiser la concordance du topogramme-Personnes avec le topogramme-ID, on fait intervenir la courbe temporelle du topogramme-Personnes et du topogramme-ID, sachant que lorsque les personnes saisies et les supports de données saisis ou les appareils électroniques mobiles se déplacent dans la courbe temporelle selon un modèle comparable, ceux-ci sont reliés entre eux de façon plus fiable.

6. Procédé de contrôle d'autorisations d'accès par un système de contrôle d'accès selon l'une quelconque des revendications précédentes, sachant que le premier procédé est un procédé dans le cadre duquel des supports de données ou des appareils électroniques mobiles envoient, à des intervalles réguliers par le biais d'un standard Bluetooth à faible énergie (BFE) dans le cadre d'une « Diffusion » une ID, à laquelle est clairement attribuée au moins une autorisation d'accès ou des données d'une autorisation d'accès, laquelle est reçue par des unités émission-réception BFE reliées à un ordinateur comprenant une UC et des moyens de mémorisation à portée de l'appareil électronique mobile ou du support de données, sachant que la localisation des appareils électroniques mobiles ou des supports de données a lieu par le fait que la distance entre l'appareil électronique mobile et les unités émission-réception BFE est déterminée à l'aide d'une intensité de signal de référence, qui correspond en règle générale à l'intensité de signal à une distance d'un mètre et qui est contenue en tant qu'information dans le signal de l'appareil électronique mobile ou du support de données ou est déposée en fonction de l'appareil électronique mobile ou du support de données dans un tableau mémorisé dans l'ordinateur, sachant qu'ensuite une trilatération est exécutée ou une multilatération pour plus de trois unités émission-réception BFE.

7. Procédé de contrôle d'autorisations d'accès selon l'une quelconque des revendications précédentes 1-5, sachant que le deuxième procédé d'imagerie pour l'identification de personnes est réalisé au moyen de caméras tridimensionnelles, de caméras stéréo ou de caméras PMD, lequel permet une saisie de position précise des personnes au moyen de l'analyse d'image.

8. Procédé de contrôle d'autorisations d'accès selon l'une quelconque des revendications précédentes 1-5, sachant que pour exécuter le deuxième procédé d'imagerie, on utilise des caméras trinoculaires, lesquelles comprennent respectivement trois caméras individuelles à distance différente l'une de l'autre, qui sont disposées en ligne, sachant que deux de ces caméras individuelles agissent respectivement en tant que caméra stéréo, sachant que les différentes possibilités de combinaison des caméras individuelles en une caméra stéréo permettent une large variation des distances focales possibles et permettent de ce fait une analyse optimale de la zone d'entrée du système de contrôle d'accès.
